(19)

Europäisches
Patentamt
European
Patent Office
Office européen
des brevets

(11) **EP 2 444 787 A1**

(12) **EUROPEAN PATENT APPLICATION**

(43) Date of publication:
**25.04.2012 Bulletin 2012/17**

(51) Int Cl.:
***G01M 5/00*** *(2006.01)*

(21) Application number: **11478002.6**

(22) Date of filing: **01.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.10.2010 LT 2010093**

(71) Applicant: **Vilnius Gediminas Technical University
10223 Vilnius (LT)**

(72) Inventors:
• **Vytautas, Kazimieras Augustaits
07143 Vilnius (LT)**
• **Vytautas, Bicinskas
10231 Vilnius (LT)**

(74) Representative: **Einoris, Vytautas
D. Gerbutaviciaus st. 1/42-155
04318 Vilnius (LT)**

(54) **Method and device for bridge state evaluation using dynamic method**

(57)     This invention is intended to use it for bridge condition diagnostics.

Aim of this invention is simplification of diagnostic process for evaluation of technical condition of bridge using these diagnostics parameters: deflection of bridge span midpoint from dead load, coefficient of stiffness defining stiffness of bridge span, which is defined using comparatively to deflected from dead load span position, lowest vertical absolute natural frequency of bridge span or approximately equal to it resonance frequency.

Purpose of this invention is achieved by retrieving mentioned criteria from natural vertical absolute vibration, which are registered and processed according here presented method using electronic and computer technique.

To explain essence of invention here vibrational system is reduced to one degree of freedom (DOF). By this simplification it is assumed that bridge span and their support creates mass less skeleton and mass of system M are transmitted to middle point A. Its value, not defined in this case, must be so, that massless skeleton should deflect by size $y_1$, like defined in fig. 1. In this case it is known relation between natural frequency $\omega$ and bridge span middle deflection $y_1$.

In another case to obtain diagnostic parameters of bridge span it is used resonant frequency, which is with vanishing error equal to natural system frequency.

To get these diagnostics parameters, there are used an equipment, consisting with sensor, data collecting equipment, computer with corresponding software and vibration exciting equipment, which can be traffic movement, jump of a car on special barrier, laying on bridge span carriageway or special vibrator.

Fig. 1

EP 2 444 787 A1

**Description**

**1. Area of technology**

Diagnostics of civil construction particularly connected with evaluation of bridge state using experimental methods.

**2. Aim of invention**

Aim of this invention is simplification of experimental diagnostic process for definition of these diagnostic criteria: vertical deflection of bridge span middle section from dead load, coefficient of stiffness of bridge span, defined based on deflected bridge span from dead load; bridge span transverse vertical absolute vibration lowest natural frequency or to approximately equal lowest resonant frequency.

**3. Level of technology**

There are widely known methods of truss testing (M. Y. H. Bangash. Prototype bridge structures: analysis and design, London: Thomas Telford publishing, 1999, 1195 p.; Bridge testing: Research report (Alabama Department of Transportation), C. H. Yoo, J. M. Stallings, Alabama Highway Dept.], Bureau of Research and Development, 1993, 160 p.; access via Interneta: http://www.campbellsci.com/bridge)**:**

    1) evaluating of bridge structure by measuring mechanically bridge span deflection from statically applied live load (mostly used present procedure);
    2) evaluating of bridge structure by measuring contactless bridge span deflection from statically applied live load using laser displacement sensors;
    3) measuring of bridge vibrations excited by traffic using laser beam and afterwards analyzing them (Bridge monitoring system: United States Patent 6240783);
    4) vehicle movement registering system (Bridge movement detector : United States Patent 5801314);
    5) defining bridge properties by linking experimentally given characteristics with virtual model of bridge (Testing system and testing method for structure: United States Patent Application 20020116136).

1st method is main method recently evaluating bridge span quality; main shortage of it is price and duration of experimental evaluation. Using this method bridge span is loaded with live load, close to critical, which is dangerous for bridge construction, traffic is closed during all testing period, and there are many preparatory works.
Method mentioned in 2nd position differs from 1st method by measuring means, where static deflection of bridge span is measured by contactless, usually laser sensors in respect to ground. Measuring equipment in this method is more expensive, but measuring time is shorter and it is not necessary have access to bridge span bottom to fix measuring devices.
3rd method uses dynamic methods to evaluate bridge quality, but there are processed forced bridge vibrations excited by traffic which not represent exceptionally bridge quality because it is integral characteristic, and forced bridge vibrations brings only dynamic response of bridge to mentioned excitation but not the bridge quality.
Method in 4th position differs from previous by measuring means and bears the same shortages.
Method in 5th position, when properties of bridge are evaluated by joining theoretical model of bridge with experimental data, allows evaluate deviation of theoretical bridge properties from defined experimentally ones, but this method requires high-skilled personnel and sophisticates analysis tools. Nevertheless, bridge properties are evaluated relatively, thus critical state or further quality worsening cannot be detected.
Closest method of diagnostics of bridge structure and availability, which can be assumed as closest to proposed one, bridge structure elements can be evaluated by researching their resonant frequency, which is excited by exciter of every structure beam. Weaknesses of such method:

    1. This method is applicable only to such bridge design, when structure elements are beams with permanent cross-section (applied to wooden bridges);
    2. During test beams cannot have intermediate connections between support (existing connections are freed during test);
    3. During test procedure there is necessary to remove carriageway cover in order to open access to each beam;
    4. For exciting of vibrations special vibrator is necessary.

**4. Essence of invention**

Aim of invention is achieved by using above listed diagnostic criteria from excited absolute transverse vertical vibration; their signals are registered and processed according to methodology defined in this invention, using electronic, computer hardware and software.

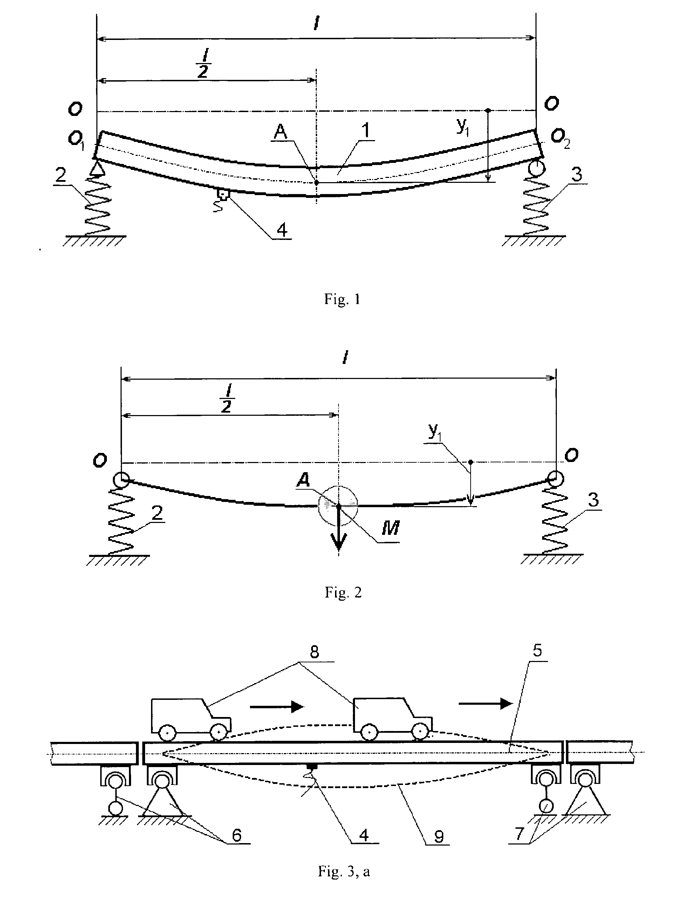

Diagram of bridge is presented in Fig. 1. There is shown bridge span of length *l*, which is in deflected mode, laying on supports, deformed by dead load 2 and 3. Deformation $y_1$, is caused by bridge span dead load and is measured between theoretical span axis O-O and middle section of deflected axis $O_1$-$O_1$ It is assumed that bridge span is statically defined bridge assembly and its maximum static deflection $y_1$, is in span middle section. It is also assumed that bridge construction elements, connections and supports are preloaded by own weight; therefore, the bridge span lays on the elastic support and with vanishing error can be treated as linear stationary oscillatory system.

To explain essence of invention, oscillatory system is simplified to one degree-of-freedom system, which is showed in Fig. 2. For the sake of simplification it is stated that bridge span and its support is massless frame and its reduced mass M is concentrated in span middle point A. Value of the reduced mass M here is not examined, but its value must cause the same deflection $y_1$, to the massless frame as the bridge span shown in Fig. 1. Therefore between static deflection $y_1$, of the bridge span and absolute transverse vertical natural vibration angular frequency ω, defined neglecting friction, there exists such a dependency (S. Timoshenko, D.H. Young, W. Weaver. Vibration problems in engineering. John Willey&sons, N. Y.1990, 624 p.)

$$\omega = \sqrt{\frac{g}{y_1}},$$ 
$$(1)$$

where g - free fall acceleration.

This dependency is accurate incase of concentrated mass M of bridge slope is placed on massless frame in the point A and deflection from mass M coincides with shape of lowest absolute vertical natural vibration without dumping. Even this coincidence is approximate, its error is vanishing.

Estimation of previously described bridge span $y_1$, is based on transformed expression (1), when angular frequency ω is known:

$$y_1 \cong \frac{g}{\omega^2}.$$ 
$$(2)$$

Angular frequency ω is possible to obtain experimentally from excited absolute transversal natural vibrations, which should be measured by sensors and signal processed by computer. It is also possible obtain angular frequency ω from harmonic forced vibration. It is known that for linear stationary oscillatory system lowest natural frequency is approximately, with small error is equal to lowest resonant frequency (error appears due to dumping in system, in case where dumping is neglected, these frequencies are equal). For this invention case this mean, that angular frequency ω with small error is equal to bridge span absolute vertical transverse vibration lowest frequency v, i.e.

$$\omega \cong v,$$ 
$$(3)$$

therefore deflection $y_1$, from equation (2) is possible to obtain from resonant frequency v, detected from excited by vibrator harmonic absolute transverse vibration and from them finding desired frequency v by changing exciting frequency.

Experimentally frequencies ω and v are obtained with respect to dumping. Bridge spans; covered by this invention, has logarithmical decrement δ< (0.6...0.5), therefore dumping influence to frequencies is vanishing.

Taking into account of explanation above, there is proposed a new method for bridge span deflection $y_1$, detection. Procedure is performed this way (Fig.1):

1) There is obtained bridge span transverse vertical lowest natural frequency ω or approximately equal to it lowest resonant harmonic transverse vertical vibration frequency v. Natural frequency ω is obtained by one of method a) or b).

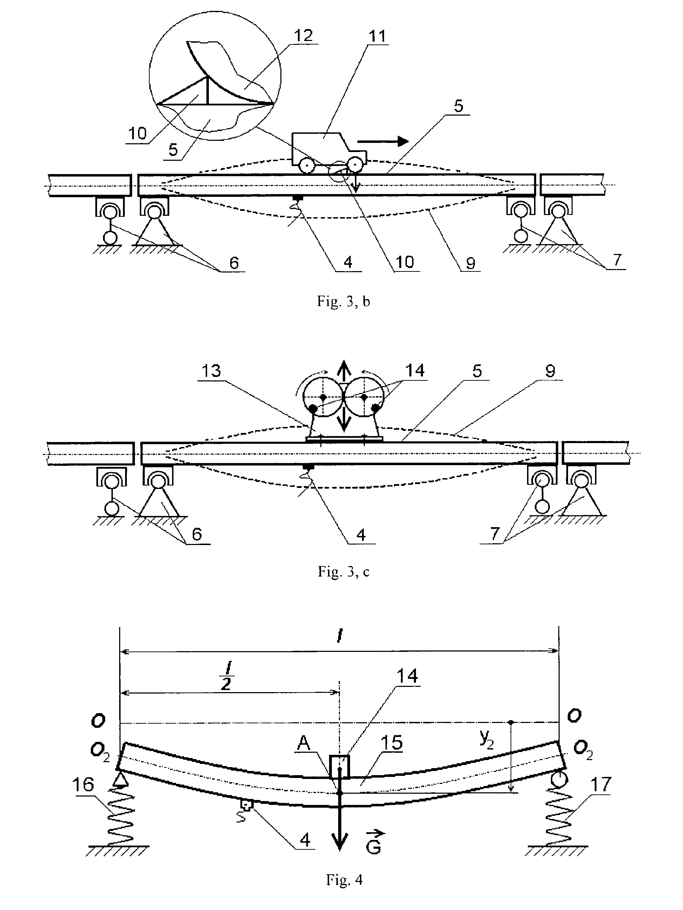

a) First method of natural frequency obtaining is shown in Fig. 3, a. Here frequency is extracted from absolute transverse vibrations of span 5. Transverse vibrations 9 are excited by traffic, for example car 8. Vibrations are registered by attached to span 5 sensors 4, from which signal frequency ω is extracted.

b) Second method of frequency ω obtaining schematic presented in Fig. 3, b. When car 11 passed bridge span, he crosses barrier of special shape 10, placed in transverse to carriageway direction, and car wheels 12, from barrier 10 profile hitting surface of span 5 carriageway and excites its absolute transverse vertical natural vibrations 9, which are registered by sensor 4 and frequency ω is extracted from sensor 4 signal.

1. Diagram for resonant frequency v obtaining is presented in Fig. 3, c. Vibrations are excited by harmonic vertical mechanical vibrator 13 (can be another type one), which is attached to bridge span 5. Two of exciters eccentric masses 14 are driven by electrical motor with controlled rotational speed and thus creates harmonic time varying force F. Vibrations are measured by sensor 4. By changing rotational speed of electric motor which drives rotating eccentric masses 14 and therefore, transverse harmonic forced vibration frequency, then using signal of sensor 4, resonant frequency v of bridge span 5 is found.

In all mentioned cases of obtaining ω and v it is assumed, that mass of vibrations excited equipment is vanishing in comparison with bridge span mass and it can be neglected.

2. Deflection of bridge span $y_1$ from dead load is defined by formulas (2) and (3).

Coefficient of stiffness of bridge span is obtained according schematic, shown in Fig. 4 in three steps:

1. Defining deflection of span $y_1$, by method, explained before;
2. Center of span is loaded by known live load 14 with weight G, which deflects span until position 15, then additionally deflected span deflection $y_2$ is defined the same way as deflection $y_1$, but weight G of live load 14 is taken into account;
3. When deflections $y_1$, and $y_2$ are known, coefficient of stiffness is defined by formula:

$$k = \frac{G}{y_2 - y_1}.$$

(4)

During process of obtaining coefficient of span stiffness k, weight G of live load 14 is selected so, that difference of span frequencies ω and v, taken with live load 14 and without it, should be significant in order to get stable value of k. Weight G of live load 14 is much smaller than live load of span, used in method overview as 1 method of bridge test.

Then lowest absolute transverse natural vibration frequency ω or approximately equal to it frequency v of forced absolute transverse harmonic vibration of span is obtained during bridge span middle cross section deflection evaluating procedure.

**4. Description of drawings**

Method of bridge quality evaluating using dynamic method and equipment for method realization is shown in Fig. 1, 2, 3 a, 3 b, 3 c, 4.

Fig. 1 shows schematics of bridge span, deflected by dead load.
Fig. 2 shows schematics of bridge span, simplified up to 1 degree of freedom.
Fig. 3 shows schematics of exciting of transverse vertical vibration of bridge span:

a) Exciting by passing traffic on bridge carriageway;
b) Exciting by passing special barrier, laying on span carriageway;
c) Exciting by mechanical eccentric vibrator.

Fig. 4 shows schematics of definition of coefficient of transverse stiffness of span in vertical direction.

Positions in Fig. 1:1- deflected by dead load bridge span, laying on deflected supports; 2, 3 - deflected bridge span supports from dead load; 4 - sensor, registering vertical span vibration; O-O - axis of span in theoretical non-deformed position; $O_1$-$O_1$ - axis of span in deflected by dead load; $y_1$, - displacement of span middle point from dead load; 1 - length of span; A - midpoint of span.

In Fig. 2 it is shown positions, different from positions in Fig. 1: M - reduced mass of bridge span in point A.

In Fig. 3 a it is shown positions, different from positions in Fig. 1, 2: 5 - bridge span in relatively non deformed position; 6, 7 - supports of span in non deformed state; 8 - passing traff on bridge span; 9 - schematically shown vibrating bridge span position.

In Fig. 3b it is shown positions, different from positions in Fig. 1, 3: 10 - barrier for vibration excitation; 11 - traffic, passing barrier and exciting vibration; 12 - wheel of traffic, passing barrier.

In Fig. 3c it is shown positions, different from positions in Fig. 1,3: 13 - attached to bridge span mechanic eccentric vibrator, 14 - vibrator makeweights.

In Fig. 4 it is shown positions, different from positions in Fig. 1, 2, 3, 4, 5: 14 - additional span live load; 15 - bridge span, deflected by dead load and live load, laying on deformed supports; 16, 17 - span supports, deformed by dead load and live load; $O_2$-$O_2$ - axis of span, deflected by dead load and live load; $y_2$ - displacement of midpoint of bridge span, loaded by dead load and live load; G - weight of live load.

### Claims

1.  Method of bridge technical diagnostics, used to every bridge span, assumed to be symmetric to its midpoint, obtaining midpoint transverse deflection from dead load, midpoint vertical transverse stiffness defined by coefficient of stiffness defined from position of dead load deflection and bridge span absolute transverse vertical lowest natural frequency or approximately equal to it resonant frequency, claims that span midpoint deflection from dead load is obtained from bridge span absolute vertical transverse vibrations, excited by passing traffic or artificially excited by vehicle, passing through barrier of special shape or excited by vibrator or by another meant hits to span with condition, that mass of vibration exciter is small in comparison with span mass and can be neglected; mentioned vibrations are measured by sensor and from its signal extracted, depending from kind of measured vibrations, lowest natural frequency or lowest resonant frequency by assuming equality of them; desired deflection is obtained dividing free fall acceleration by mentioned above natural or resonant frequency; the same way by including live load span midpoint deflection is found and coefficient of stiffness when live load is divided by difference of deflection from dead load and deal load with live load.

2.  Diagnostic method for evaluating technical condition of bridge according claim 1, claims, that feature to excite vibrations of span using vehicle, is barrier, placed transverse to traffic direction on span carriageway of special profile, that wheels of vehicle hits span carriageway and excites vertical natural vibrations.

3.  Diagnostic method for evaluating technical condition of bridge according claim 1, claims, that vibrator, intended to excite vibration of bridge span is fixed to span, which excites vibration of span with variable frequency, intensity of vibration is measured by sensor and by variation of vibration intensity lowest resonant frequency is found.

4.  Diagnostic method for evaluating technical condition of bridge according claim 1, claims, that absolute bridge span transverse vertical absolute vibration sensor is fixed to span, signal of sensor delivered to data registering device, where using spectral analysis or another method, lowest of span absolute transverse vertical natural vibration frequency or, in another case, lowest resonant frequency is obtained.

5.  Diagnostic device for evaluating technical condition of bridge, intended to realize method according claims 1, 2, 3, 4, claims, that it have absolute vibration sensor, data registering equipment, computer with corresponding software and bridge vibration exciting equipment - passing traffic or, barrier and car or vibrator.

Fig. 1

Fig. 2

Fig. 3, a

Fig. 3, b

Fig. 3, c

Fig. 4

Europäisches
Patentamt

European
Patent Office

Office européen
des brevets

**EUROPEAN SEARCH REPORT**

Application Number

EP 11 47 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 901 575 A (BOHANNAN WILLIAM L [US] ET AL) 20 February 1990 (1990-02-20) <br> * abstract; figure 1 * <br> ----- | 1-5 | INV. <br> G01M5/00 |
| | | | **TECHNICAL FIELDS SEARCHED (IPC)** |
| | | | G01M |

The present search report has been drawn up for all claims

| Place of search | Date of completion of the search | Examiner |
|---|---|---|
| The Hague | 22 February 2012 | Vytlacilová, Lenka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 444 787 A1**

## ANNEX TO THE EUROPEAN SEARCH REPORT
## ON EUROPEAN PATENT APPLICATION NO.

EP 11 47 8002

22-02-2012

| Patent document cited in search report | | Publication date | Patent family member(s) | | Publication date |
|---|---|---|---|---|---|
| US 4901575 | A | 20-02-1990 | CA | 2001926 A1 | 31-05-1990 |
| | | | EP | 0371631 A2 | 06-06-1990 |
| | | | JP | 2212734 A | 23-08-1990 |
| | | | US | 4901575 A | 20-02-1990 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6240783 B
- US 5801314 A
- US 20020116136 A

**Non-patent literature cited in the description**

- **M. Y. H. BANGASH.** Prototype bridge structures: analysis and design. Thomas Telford publishing, 1999, 1195
- **C. H. YOO ; J. M. STALLINGS.** *Bridge testing: Research report (Alabama Department of Transportation)*
- *Bureau of Research and Development,* 1993, 160, http://www.campbellsci.com/bridge